Europäisches Patentamt

European Patent Office

Office européen des brevets

(11) Publication number: **0 414 905 A1**

# EUROPEAN PATENT APPLICATION
## published in accordance with Art. 158(3) EPC

(21) Application number: 90901905.1

(51) Int. Cl.5: **G05B 19/403**

(22) Date of filing: 17.01.90

(86) International application number:
**PCT/JP90/00045**

(87) International publication number:
**WO 90/09626 (23.08.90 90/20)**

(30) Priority: 07.02.89 JP 126619/89

(43) Date of publication of application:
06.03.91 Bulletin 91/10

(84) Designated Contracting States:
**DE FR GB**

(71) Applicant: **FANUC LTD.**
**3580, Shibokusa Aza-Komamba Oshino-mura**
**Minamitsuru-gun, Yamanashi 401-05(JP)**

(72) Inventor: **SEKI, Masaki**
**3-15-2-406, Takaidonishi**
**Suginami-ku Tokyo 168(JP)**
Inventor: **TAKEGAHARA, Takashi**
**256-2, Nishiteragata-machi Hachioji-shi**
**Tokyo 192-01(JP)**
Inventor: **NAKAJIMA, Masatoshi Fanuc Dai-3**
**Vira-karamatsu**
**3527-1, Shibokusa Oshino-mura**
**Minamitsuru-gun Yamanashi 401-05(JP)**

(74) Representative: **Billington, Lawrence Emlyn et**
**al**
**Haseltine Lake & Co Hazlitt House 28,**
**Southampton Buildings Chancery Lane**
**London WC2A 1AT(GB)**

(54) **AUTOMATIC PROGRAMMING METHOD.**

(57) An automatic programming method of preparing NC data efficiently and automatically from a part program even when undefined symbols are included in the part program. The processor in an automatic programming apparatus automatically prepares NC data by successively decoding and executing the statement of the part program that is read from the RAM. When it is determined that an undefined symbol is contained in the decoded statement (S4), the processor displays the undefined symbol on the screen and requests to define the symbol (S6). When a definition sentence of the undefined symbol and an input instruction for permitting the input of the definition sentence are manually input (S7), the definition sentence is automatically inserted just before the statement that includes the undefined symbol, and the statement of a part program that follows the definition sentence is executed (S7,S8).

## FIG.2

```
           ┌──────────────┐
           │    START     │
           └──────┬───────┘
                  │                 ┌─ S1
           ┌──────▼───────┐
      ┌───▶│   i ◄─── 1   │
      │    └──────┬───────┘
      │           │                 ┌─ S2
      │    ┌──────▼───────┐
      │    │ DECODE i'TH LINE │
      │    └──────┬───────┘
      │           │                 ┌─ S3
      │        ◇─────◇      YES          ┌────────────┐
      │       ◇ END ? ◇ ──────────────▶ │   E N D    │
      │        ◇─────◇                   └────────────┘
      │           │ NO         ┌─ S4
      │        ◇─────────◇   NO
      │       ◇ UNDEFINED ◇ ─────────────┐
      │      ◇ SYMBOL CONTAINED ? ◇      │
      │        ◇─────────◇               │    ┌─ S5
      │           │ YES      ┌─ S6       │  ┌────────────┐
      │    ┌──────▼────────────┐         └─▶│  EXECUTE   │
      │    │ DISPLAY REQUEST FOR KEY │       └─────┬──────┘
      │    │ ENTRY OF UNDEFINED SYMBOL │           │
      │    └──────┬────────────┘                  │
      │           │                               │
      │        ◇─────────◇   NO                   │
      │       ◇   INPUT    ◇ ──────┐              │
      │      ◇ COMMAND ISSUED ? ◇  │              │
      │        ◇─────────◇ └─ S7   │              │
      │           │ YES            │              │
      │    ┌──────▼──────────┐     │              │
      │    │ INSERT ENTERED STATEMENT │ ┌─ S8     │
      │    │ INTO PART PROGRAM AND │              │
      │    │ EXECUTE         │                    │
      │    └──────┬──────────┘                    │
      │           │◄───────────────────────────────┘
      │    ┌──────▼───────┐
      │    │  i ◄─── i + 1 │  ─ S9
      │    └──────┬───────┘
      └───────────┘
```

2

## AUTOMATIC PROGRAMMING METHOD

Technical Field

The present invention relates to an automatic programming method, and more particularly, to an automatic programming method capable of efficiently originating NC data from a part program even when the part program contains an undefined symbol.

Background Art

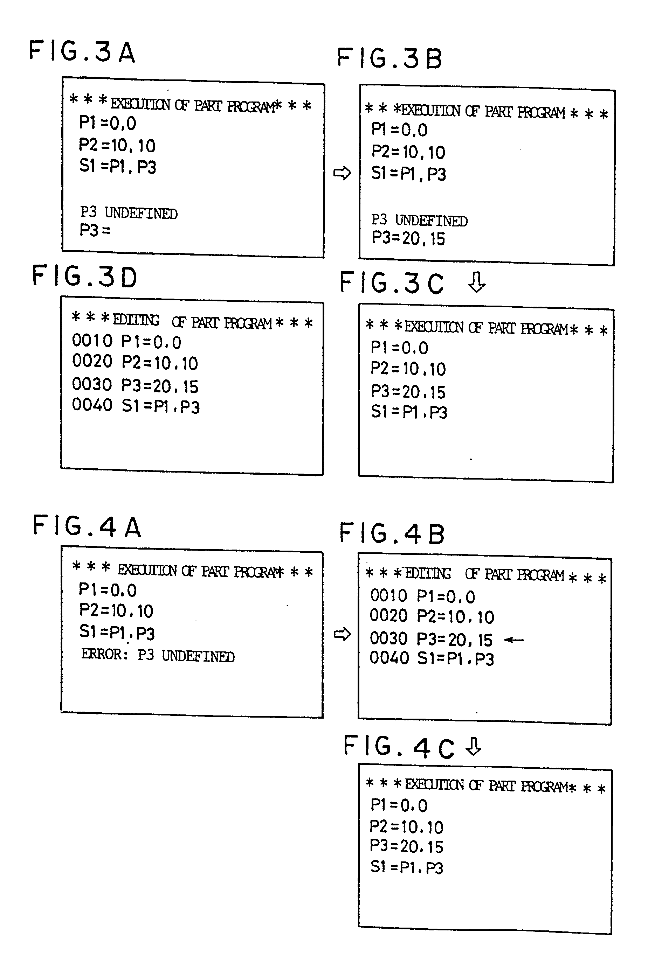

Conventionally known are automatic programming apparatuses which originate NC data from a part program, and display an error message when an undefined symbol is contained in the part program. More specifically, when the conventional automatic programming apparatuses read out a statement containing the undefined symbol from the part program while the part program is being executed for automatic origination of the NC data, they interrupt the execution of the part program, and at the same time, display on a display screen a message to the effect that a symbol is undefined (Fig. 4A shows a case in which an undefined symbol P3 is contained in a linear definition statement S1). In this case, an operator switches the operation mode of the automatic programming apparatus from an execution mode to an edit mode, and defines the undefined symbol and edits the part program in the edit mode (Fig. 4B shows a case in which the part program is edited after the definition of the symbol P3). Then, the operator restarts the operation of the programming apparatus in the execution mode. At the restart of the operation, the programming apparatus reexecutes the part program from the beginning (Fig. 4C).

According to the automatic programming method using the conventional apparatus, as described above, the operation of the automatic programming apparatus in the execution mode must be interrupted to discontinue the execution of the part program and the part program must be edited every time an undefined symbol is read out from the part program. At the restart of the apparatus operation in the execution mode, moreover, the part program must be reexecuted from the beginning. In consequence, the efficiency of the NC data origination based on the part program lowers.

Disclosure of the Invention

The object of the present invention is to provide an automatic programming method capable of efficiently automatically originating NC data from a part program even when the part program contains an undefined symbol.

In order to achieve the above object, an automatic programming method according to the present invention comprises steps of: (a) requiring definition of an undefined symbol when a statement containing the undefined symbol is read out from a part program while the part program is being executed for automatic origination of NC data; (b) automatically inserting a definition statement for the undefined symbol, inputted in response to the requirement for definition, immediately before the statement; and (c) continuing the execution of the part program in accordance with the definition statement.

According to the present invention, as described above, the definition of the undefined symbol is required when the statement containing the undefined symbol is read out from the part program during the automatic origination of the NC data, the definition statement inputted in response to the requirement for the definition is automatically inserted immediately before the statement which contains the undefined symbol, and the execution of the part program is continued in accordance with the definition statement. Thus, the automatic origination of the NC data based on the part program can be efficiently effected without editing and reexecuting the part program from the beginning after interrupting the execution of the part program every time an undefined symbol is read out.

Brief Description of the Drawings

Fig. 1 is a schematic block diagram showing the principal part of an automatic programming apparatus for effecting an automatic programming method according to one embodiment of the present invention;

Fig. 2 is a flow chart showing an NC data origination process for the apparatus of Fig. 1;

Fig. 3 is a diagram illustrating a display on a display unit shown in Fig. 1 during the NC data origination; and

Fig. 4 is a diagram illustrating a conventional example of the display during the NC data origination.

Best Mode of Carrying Out the Invention

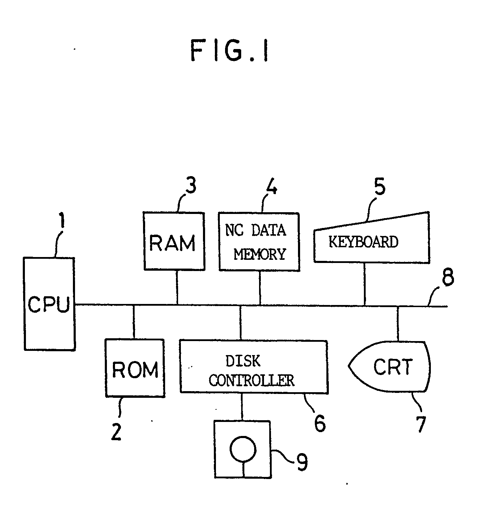

Referring to Fig. 1, an automatic programming apparatus for effecting an automatic programming method according to one embodiment of the present invention comprises a read-only memory (ROM) 2 stored with a control program for controlling the programming apparatus, a random access memory (RAM) 3 for temporarily storing a part program, results of processing by a processor, etc., a memory 4 for storing originated NC data, a keyboard 5, and a display unit 7. The RAM 3 is arranged the part program prepared by an operator by using the elements 5 and 7. Further, the programming apparatus comprises a disk controller 6 to be loaded with a floppy disk 9 stored with the prepared part program, and a paper tape reader (not shown) for reading out the part program recorded on a paper tape, whereby the part program read out from the floppy disk 9 or the paper tape is stored in the RAM 3. The elements 2 to 7 are connected to the processor 1 by means of busses 8.

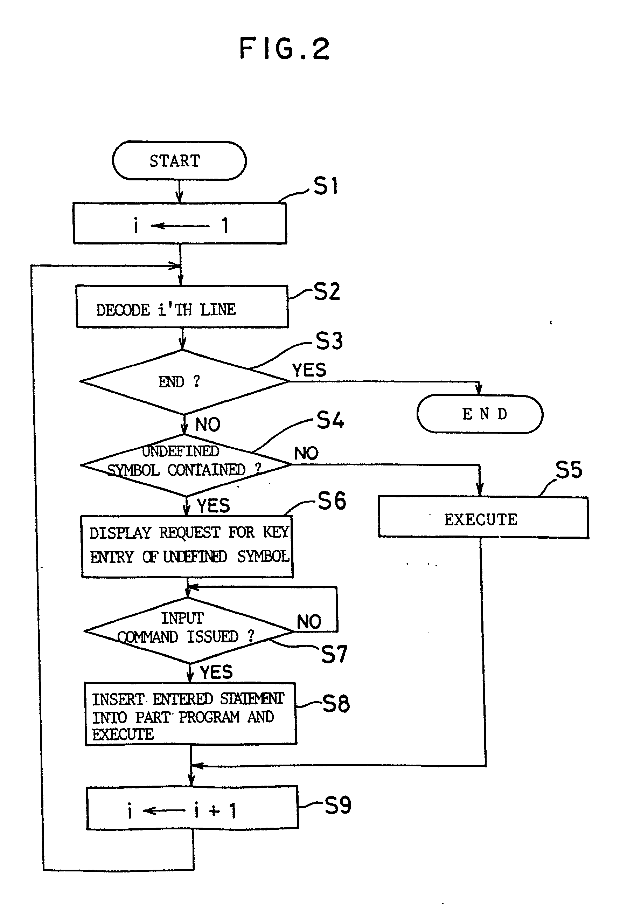

Referring now to Fig. 2, the operation of the automatic programming apparatus of Fig. 1 will be described.

When the operator operates the keyboard 5 to cause the automatic programming apparatus to operate in an execution mode, the processor 1 periodically executes an NC data origination process shown in Fig. 2.

First, the processor 1 sets an initial value "1" in a pointer i (Step S1), and reads out and decodes a statement for a first line (generally, an i'th line) corresponding to the pointer value, from the RAM 3 (Step S2). Thereupon, the statement is displayed on a display screen of the display unit 7. If it is concluded in Step S3 that the decoded statement is not a termination command, the processor 1 determines whether an undefined symbol is contained in the decoded statement (Step S4). If no undefined symbol is contained, this statement is executed and converted into NC data, which is stored in the memory 4 (Step S5). Then, the pointer i is incremented by "1" (Step S9), whereupon the NC data origination process for the present cycle ends.

If it is concluded in Step S4 of a certain processing cycle that an undefined symbol is contained in the statement, the processor 1 causes the display unit 7 to display the undefined symbol on its display screen (Step S6). If a statement S1 containing an undefined symbol P3 is read out, for example, the symbol P3 is displayed, as shown in Fig. 3A. After thus displaying the undefined symbol and requiring this symbol to be defined, the processor 1 stands ready for the entry of a definition statement for the undefined symbol.

The operator operates the keyboard 5 to enter a definition statement, e.g., a definition statement "P3 = 20, 15" for the aforesaid symbol P3. Then, the operator confirms by the screen display (Fig.

3B) that the definition statement thus entered is proper, and thereafter, enters, by means of the keyboard 5, an input command to allow the definition statement to be inserted into the part program.

If it is concluded in Step S7 that the input command is entered, the processor 1 inserts a definition statement, e.g., the definition statement "P3 = 20, 15," into a line immediately before the statement which is concluded at step S4 to contain an undefined symbol, e.g., the statement S1 (Fig. 3C), and executes this definition statement. Further, the processor 1 assigns the pointer i to the inserted definition statement, and assigns new pointers individually to statements of the part program subsequent to this definition statement, as shown in Fig. 3D (Step S8). Then, the pointer i is incremented in the aforesaid Step S9, whereupon the NC data origination process for the present cycle ends.

If it is concluded, in Step S3 of a certain processing cycle after the NC data origination process of Fig. 2 is repeatedly executed in the aforesaid manner, that the statement decoded in Step S2 is a termination command, the NC data origination ends. The origination of the final NC data is already completed by the processing cycle immediately before the termination command is discriminated. In other words, all the NC data successively originated so far are already stored in the memory 4 at the end of the NC data origination.

## Claims

1. An automatic programming method, comprising steps of:
(a) requiring definition of an undefined symbol when a statement containing said undefined symbol is read out from a part program while said part program is being executed for automatic origination of NC data;
(b) automatically inserting a definition statement for said undefined symbol, inputted in response to said requirement for definition, immediately before said statement; and
(c) for continuing the execution of the part program in accordance with said definition statement.

2. An automatic programming method according to claim 1, wherein the definition of said undefined symbol is required by displaying said undefined symbol on a display screen in said step (a).

3. An automatic programming method according to claim 1 or 2, wherein said step (b) includes a step (b1) for displaying said definition statement on the display screen when said definition statement is manually inputted, and a step (b2) for executing the automatic insertion of said definition statement immediately before said statement when an input command for allowing entry of said definition statement is inputted.

# FIG.1

# FIG.2

```
        ┌──────────┐
        │  START   │
        └────┬─────┘
             │
    ┌────────▼────────┐  S1
    │   i  ←──  1     │
    └────────┬────────┘
             │
    ┌────────▼────────┐  S2
    │ DECODE i'TH LINE│
    └────────┬────────┘
             │
          ◇ END ? ◇───── YES ──────────┐  S3
             │ NO                       │
                                   ┌────▼────┐
          ◇ UNDEFINED              │  E N D  │
            SYMBOL CONTAINED ? ◇── NO ──┐     └─────────┘  S4
             │ YES                      │
    ┌────────▼─────────┐  S6      ┌─────▼─────┐  S5
    │ DISPLAY REQUEST  │          │  EXECUTE  │
    │ FOR KEY ENTRY OF │          └─────┬─────┘
    │ UNDEFINED SYMBOL │                │
    └────────┬─────────┘                │
             │                          │
          ◇ INPUT                       │
            COMMAND ISSUED ? ◇── NO     │  S7
             │ YES                      │
    ┌────────▼─────────┐  S8            │
    │ INSERT ENTERED   │                │
    │ STATEMENT INTO   │                │
    │ PART PROGRAM AND │                │
    │ EXECUTE          │                │
    └────────┬─────────┘                │
             │◄───────────────────────┘
    ┌────────▼────────┐  S9
    │  i  ←── i + 1   │
    └────────┬────────┘
             │
             └──────────►
```

## FIG.3A

```
* * *EXECUTION OF PART PROGRAM* * *
P1 =0,0
P2 =10, 10
S1 =P1, P3


P3  UNDEFINED
P3 =
```

## FIG.3B

```
* * *EXECUTION OF PART PROGRAM * * *
P1 =0,0
P2 =10,10
S1 =P1, P3


P3  UNDEFINED
P3 =20, 15
```

⇨

## FIG.3D

```
* * *EDITING  OF PART PROGRAM * * *
0010 P1=0,0
0020 P2=10,10
0030 P3=20,15
0040 S1=P1,P3
```

## FIG.3C  ⇩

```
* * *EXECUTION OF PART PROGRAM* * *
P1 =0,0
P2 =10,10
P3 =20,15
S1 =P1,P3
```

## FIG.4A

```
* * * EXECUTION OF PART PROGRAM* * *
P1 =0,0
P2 =10,10
S1 =P1,P3
ERROR: P3 UNDEFINED
```

## FIG.4B

```
* * *EDITING  OF PART PROGRAM * * *
0010 P1=0,0
0020 P2=10,10
0030 P3=20,15  ←
0040 S1=P1,P3
```

⇨

## FIG.4C ⇩

```
* * *EXECUTION OF PART PROGRAM* * *
P1 =0,0
P2 =10,10
P3 =20,15
S1 =P1,P3
```

# INTERNATIONAL SEARCH REPORT

**I. CLASSIFICATION OF SUBJECT MATTER** (if several classification symbols apply, indicate all) [6]

According to International Patent Classification (IPC) or to both National Classification and IPC

Int. Cl$^5$　　G05B19/403

**II. FIELDS SEARCHED**

| Minimum Documentation Searched [7] | |
|---|---|
| Classification System | Classification Symbols |
| IPC | G05B19/403 |

| Documentation Searched other than Minimum Documentation to the Extent that such Documents are Included in the Fields Searched [8] | |
|---|---|
| Jitsuyo Shinan Koho | 1971 – 1989 |
| Kokai Jitsuyo Shinan Koho | 1971 – 1989 |

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| X | JP, A, 63-298406 (Mitsubishi Electric Corporation), 6 December 1988 (06. 12. 88), Page 3, upper left column, line 8 to lower right column, line 10 (Family: none) | 1 – 3 |

\* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| April 3, 1990 (03. 04. 90) | April 16, 1990 (16. 04. 90) |
| International Searching Authority | Signature of Authorized Officer |
| Japanese Patent Office | |

Form PCT/ISA/210 (second sheet) (January 1985)